(19) Europäisches Patentamt
European Patent Office
Office européen des brevets

(11) EP 2 138 542 A1

(12) **EUROPEAN PATENT APPLICATION**
published in accordance with Art. 153(4) EPC

(43) Date of publication:
**30.12.2009 Bulletin 2009/53**

(21) Application number: **08739738.6**

(22) Date of filing: **27.03.2008**

(51) Int Cl.:
***C08L 67/04*** (2006.01) ***D01F 6/62*** (2006.01)
***C08L 101/16*** (2006.01)

(86) International application number:
**PCT/JP2008/056628**

(87) International publication number:
**WO 2008/120807 (09.10.2008 Gazette 2008/41)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.03.2007 JP 2007093076**
**30.03.2007 JP 2007093073**

(71) Applicant: **Teijin Limited**
**Osaka-shi, Osaka 541-0054 (JP)**

(72) Inventors:
- **IKEGAME, Midori**
**Iwakuni-shi**
**Yamaguchi 740-0014 (JP)**
- **TOYOHARA, Kiyotsuna**
**Iwakuni-shi**
**Yamaguchi 740-0014 (JP)**
- **KURIHARA, Hideshi**
**Tokyo 100-0013 (JP)**

(74) Representative: **Hallybone, Huw George et al**
**Carpmaels & Ransford**
**43-45 Bloomsbury Square**
**London WC1A 2RA (GB)**

# (54) POLYLACTIC ACID COMPOSITION AND FIBER COMPOSED OF THE SAME

(57) A polylactic acid composition (A) comprising a polylactic acid component (B) comprising at least 90 mol% of an L-lactic acid unit and less than 10% of copolymerizing component units other than L-lactic acid, and a polylactic acid component (C) comprising at least 90 mol% of a D-lactic acid unit and less than 10 mol% of copolymerizing component units other than D-lactic acid, which is a mixed composition with a (B)/(C) weight ratio of between 10/90 and 90/10.

EP 2 138 542 A1

## Description

### Technical Field

The present invention relates to a polylactic acid composition that produces molded articles with practical strength, heat resistance and disperse dye affinity, and to a fiber thereof.

### Background Art

Biodegradable polymers, which are decomposed in the natural environment, have been the object of increasing interest in recent years because of their environmental friendliness, and they are actively being researched throughout the world. Known biodegradable polymers include aliphatic polyesters such as polyhydroxybutyrate, polycaprolactone and polylactic acid. These are melt moldable and are considered promising as general purpose polymers. Polylactic acid, in particular, is produced from lactic acid or lactide starting materials that can be derived from natural substances, and is therefore being studied not only as a biodegradable polymer but also as a general purpose polymer that is non-detrimental to the environment. Biodegradable polymers such as polylactic acid have high transparency, and readily undergo hydrolysis in the presence of water despite their toughness, and because their decomposition after disposal occurs without polluting the environment they are highly promising as general purpose resins with a low environmental load.

The melting point of polylactic acid is in the range of 150°C-170°C and its use as a clothing fiber in the same manner as polyethylene terephthalate or nylon therefore requires that ironing be limited to relatively low temperatures, while its use as an industrial fiber has been hampered by its unsuitability for exposure to high temperatures of about 150°C during production processes for rubber materials or resin coated fabrics.

Moreover, since polylactic acid easily dissolves in ordinary organic solvents such as chloroform, it cannot be used for purposes that involve contact with organic solvents such as oils.

Also known is the formation of polylactic acid stereocomplexes by combining poly-L-lactic acid (hereinafter also abbreviated as PLLA) composed solely of L-lactic acid units and poly-D-lactic acid (hereinafter abbreviated as PDLA) composed solely of D-lactic acid units, in the form of a solution or melt (see Patent document 1 and Non-patent document 1).

An interesting phenomenon has been discovered with such polylactic acid stereocomplexes, that they exhibit a high melting point, high crystallinity and improved properties in solvents compared to PLLA or PDLA, and several types of fibers with ironing durability have been proposed which exhibit improved heat resistance that has been impossible to achieve with conventional polylactic acid fibers.

For example, Non-patent document 1 discloses stereocomplex polylactic acid fibers obtained by melt spinning, and specifically stereocomplex fibers obtained by heat treatment of unstretched filaments formed by melt spinning of a molten blend of poly-L-lactic acid and poly-D-lactic acid, but the molecular alignments in the fibers become relaxed during heat treatment, resulting in fibers with a strength of at most 2.3 cN/dTex.

The conventional methods for forming stereocomplex fibers, including the one described in the aforementioned non-patent document, employ stretching and heat setting of amorphous unstretched filaments obtained by spinning blends of poly-L-lactic acid and poly-D-lactic acid, and in most cases heat setting is carried out at a higher temperature than the melting point of the single crystals, based on the concept that heat setting at a temperature above the melting point of the poly-L-lactic acid or poly-D-lactic acid single crystals is effective for adequate growth of stereocomplexes. While high-temperature heat setting is indeed effective for formation of stereocomplex crystals, the filaments undergo partial fusion during the process, resulting in problems such as coarse hardening or reduced strength of the fibers.

On the other hand, Patent document 2 proposes heat resistant polylactic acid fibers with a low stereocomplex crystallization ratio (Cr ratio) of about 50% and a high strength of 4.5 cN/dTex, obtained by using a crystallized unstretched filament with a Cr ratio of 10-35% by high-speed spinning at a spinning speed of 4000 m/min, and subjecting it to (multistage) stretching to a factor of 1.4-2.3. However, since the ductility is less than 20%, the physical properties have been insufficient for clothing or industrial fibers. In addition, a spinning speed of about 3000 m/min is inadequate for this process which requires a spinning speed of at least 5000 m/min, and since spinning at such speeds can only be accomplished with special spinning equipment, problems still remain to be surmounted before it can be applied for industrial production.

In other words, production of high heat resistant fibers with high strength from unstretched filaments with a Cr ratio of 0% has not been proposed in the aforementioned document nor elsewhere.

Patent document 3 proposes 200°C-heat resistant fibers having two peaks for polylactic acid homocrystals and stereocomplex crystals of above 190°C, by winding up an unstretched filament obtained by melt spinning at a spinning draft of ≥50 and a take-up speed of ≥300 m/min followed by stretching, or stretching to a stretch factor of 2.8 without winding, and then heat setting at a temperature of between 120°C and 180°C. However, this document merely

teaches that the fibers have sufficient practical strength without giving specific numerical values, and the 200°C heat resistance mentioned in the document is merely a degree of heat resistance that prevents severe changes such as fusion of fibers or changes in fabric form after the fabric has been contacted with the surface of an iron at 200°C for 30 seconds, but the document mentions that melting peaks for poly-L-lactic acid and poly-D-lactic acid single crystals are observed in DSC and therefore the heat resistance must be deemed insufficient due to melting of the single crystals.

In addition, because polylactic acid stereocomplex fibers generally have glass transition temperatures of 60°C, or about 8°C lower than polyethylene terephthalate fibers which are typically used as clothing fibers, they have the advantage of being suitable for dyeing with disperse dyes at temperatures near 100°C.

More specifically, polylactic acid fibers have fiber structures that are more easily dyed than polyethylene terephthalate fibers, but the dye molecules that have become fixed in the fiber structure tend to escape to the outside, resulting in drawbacks such as color crocking and discoloration, or in other words, poor washing durability. It has been shown that this tendency is accelerated in moist conditions.

It has been attempted to counter such crocking by adding a heat treatment step between the dyeing step and reduction cleaning step, based on the dyeing conditions, but a satisfactory solution has not been achieved (for example, see Patent document 4).

Furthermore, polylactic acid is naturally prone to hydrolysis that under dyeing conditions causes the amorphous sections of fibers to be hydrolyzed while the crystal sections selectively remain, thus creating dye-resistant regions in easily dyeable polylactic acid fibers, and therefore the problem of uneven dyeing remains unsolved.

Moreover, polylactic acid molecules have high light transmittance with virtually no absorption band in the region from the visible light range to the ultraviolet range of near 300 nm, and therefore are highly advantageous for optical applications, but since no shielding effect is provided by polylactic acid molecules in dyed products, the dye molecules themselves are susceptible to decomposition and the sunlight fastness is insufficient for practical use.

It has been proposed to use ultraviolet absorbers or ultraviolet blockers in order to overcome these drawbacks, but the use of such agents can potentially cause new problems such as yellowing of the fibers (see Non-patent document 2).

Patent document 5 proposes a fiber structure with excellent black colorability which contains an aliphatic polyester with a refractive index in the range of 1.3-1.50 and including polylactic acid with a terminal carboxyl group concentration of 0-20, as well as a fiber structure for mixing with other types of fibers.

This patent document, however, makes no reference to the ironing resistance of the fiber structure at high temperatures of around 170°C or to its co-dyeability with aromatic polyester fibers.

In other words, no polylactic acid fiber has yet been proposed that is a stereocomplex crystal-containing polylactic acid fiber with a strength of 3.5 cN/dTex or greater, a ductility of 20-50%, satisfactory ironing resistance, and a dyeable property with disperse dyes to a metric luminance (hereinafter also referred to simply as "luminance") of $L^* \leq 12$ and a metric chroma (hereinafter also referred to simply as "chroma") of $C^* \leq 10$.


[Patent document 1] Japanese Unexamined Patent Publication SHO No. 63-241024
[Patent document 2] Japanese Unexamined Patent Publication No. 2003-293220
[Patent document 3] Japanese Unexamined Patent Publication No. 2005-23512
[Patent document 4] Japanese Unexamined Patent Publication No. 2003-49374
[Patent document 5] Japanese Patent Publication 3470676 [Non-patent document 1] Macromolecules, 24,5651 (1991)
[Non-patent document 2] Kenkyu Kaihatsu, Dyeing of polylactic acid fibers., P2-5, Nagase Color Chemicals Techno Center


## DISCLOSURE OF THE INVENTION

It is an object of the present invention to provide a polylactic acid composition that produces molded articles with practical strength, heat resistance and disperse dye affinity, and to a fiber composed thereof.

## Best Mode for Carrying Out the Invention

Modes for carrying out the invention will now be explained in detail. The following explanation and examples serve only as illustration of the invention and do not restrict the scope of the invention in any way.

It is an essential condition for the polylactic acid composition (A) of the invention that it comprises a polylactic acid component (B) composed mainly of a L-lactic acid unit as the main component and 0-10 mol% of components other than the L-lactic acid unit, and a polylactic acid component (C) composed mainly of a D-lactic acid unit as the main component and 0-10 mol% of components other than the D-lactic acid unit, and that it is a polylactic acid stereocomplex composition composed with a mixed composition of (B)/(C) in a weight ratio of 10/90-90/10.

The weight-average molecular weight of the polylactic acid (A) must be in the range of 70,000 to 500,000. Within this molecular weight range, the polylactic acid composition (A) exhibits a high degree of stereocomplex crystallization, with excellent ability to form crystals as one of the conditions for producing molded articles, and especially fibers, with suitable color fastness, and with the ability to retain a tightly coupled structure between the amorphous and crystalline sections, while also allowing molded articles, and particularly fibers, of the polylactic acid composition (A) to be produced with satisfactory color fastness using disperse dyes.

While a higher molecular weight is preferred in order to increase the heat resistance and mechanical properties of molded articles, if the weight-average molecular weight of the polylactic acid composition (A) is larger than the aforementioned range it will be difficult to produce a stereocomplex structure and stereocomplex crystals with the polylactic acid composition (A), while fibers thereof will be more likely to have a loose fiber structure with large crystal and amorphous structures, a situation that is undesirable from the viewpoint of color fastness. In particular, single crystals of the polylactic acid component (B) and polylactic acid component (C) will form more readily in the fiber structure, and it is believed that the presence of such crystals in a high proportion is undesirable from the viewpoint of heat resistance and color fastness.

A strategy for achieving both mechanical properties and color fastness from the viewpoint of the weight-average molecular weight has not been proposed in the past, and has first been elucidated by the present inventors.

In light of the above, the weight-average molecular weight is preferably in the range of 80,000-300,000, more preferably 90,000-250,000 and most preferably 100,000-200,000.

If the weight-average molecular weight is less than 70,000, shaping of molded articles will be hampered and the dye affinity may be impaired. Specifically, this is attributed to the fact that the amorphous sections in which the dye is fixed are subject to hydrolysis under dyeing conditions, as a result of which the proportion of crystal structures increases and the dye affinity does not increase.

The polylactic acid composition (A) of the invention must have a degree of stereocomplex crystallization (Cr) of 30-55% based on the following formula (1), where ΔHmsc is the crystal melt enthalpy of the crystal melting peak at ≥195°C in DSC.

[Formula 1]

$$Cr = (\Delta Hmsc/142) \times 100 \quad (1)$$

The value of 142 (J/g) represents the crystal heat of fusion of a complete polylactic acid stereocomplex crystal, according to H. Tsuji, "Polylactide" in Biopolymers vol.4 (Polyesters).

The polylactic acid composition (A) having a degree of stereocomplex crystallization in this range forms stereocomplex crystals at a high proportion, and this is an essential condition for obtaining molded articles and especially fibers with a high Cr ratio and satisfactory color fastness.

If the degree of stereocomplex crystallization is low it will be difficult to form a stereocomplex crystal structure during fiber formation, the fiber heat resistance and mechanical strength will not be as readily exhibited, and the color fastness (especially light fastness) of molded articles and particularly fibers made of the composition will usually be low, although the reason for the latter is not well understood. A low Cr ratio will result in a less dense molecular structure of molded articles and association between the dye molecules, and presumably a longer relaxation time with accelerated decomposition.

In order to ensure the aforementioned degree of stereocomplex crystallization for the polylactic acid composition (A), the polylactic acid component (B) is preferably crystalline and has a melting point of between 150°C and 190°C, and more preferably between 160°C and 190°C. A polylactic acid component falling within these ranges forms stereocomplex crystals with a higher melting point when it is used to form a stereocomplex polylactic acid composition, and can thus increase the degree of stereocomplex crystallization. The polylactic acid component (B) used for the invention preferably has a weight-average molecular weight in the range of 100,000 to 500,000 and more preferably 140,000 to 250,000.

The polylactic acid component (B) used for the invention may also contain a copolymerizing component other than L-lactic acid so long as the crystallinity is not impaired. However, poly-L-lactic acid composed essentially of L-lactic acid units alone is preferred. The L-lactic acid units are preferably present in the polylactic acid component (B) at 90-100 mol%, more preferably 95-100 mol% and even more preferably 98-100 mol%. Copolymerizing component units other than the L-lactic acid unit may be present at 0-10 mol%, preferably 0-5 mol% and more preferably 0-2 mol%.

There are no particular copolymerizable components that must be used, and for example, one or more monomers selected from among hydroxycarboxylic acids such as D-lactic acid, glycolic acid, caprolactone, butyrolactone

and propiolactone, C2-30 aliphatic diols such as ethylene glycol, 1,3-propanediol, 1,2-propanediol, 1,4-propanediol, 1,5-propanediol, hexanediol, octanediol, decanediol and dodecanediol, C2-30 aliphatic dicarboxylic acids such as succinic acid, maleic acid and adipic acid, and aromatic diols and aromatic dicarboxylic acids such as terephthalic acid, isophthalic acid, hydroxybenzoic acid and hydroquinone may be used.

The polylactic acid component (C) used for the invention may also contain a copolymerizing component other than D-lactic acid so long as the crystallinity is not impaired. However, poly-D-lactic acid composed essentially of D-lactic acid units alone is preferred. The D-lactic acid units are preferably present in the polylactic acid component (C) at 90-100 mol%, preferably 95-100 mol% and more preferably 98-100 mol%. Copolymerizing component units other than D-lactic acid unit may be present at 0-10 mol%, preferably 0-5 mol% and more preferably 0-2 mol%.

The polylactic acid component (C) is preferably crystalline and has a melting point of between 150°C and 190°C, and more preferably between 160°C and 190°C. A polylactic acid component falling within these ranges forms stereocomplex crystals with a higher melting point when it is used to form a stereocomplex polylactic acid composition, and can thus increase the degree of stereocomplex crystallization.

The polylactic acid component (C) used for the invention may also contain a copolymerizing component other than D-lactic acid so long as the crystallinity is not impaired. The copolymerization ratio is not particularly restricted but is preferably less than 10 mol%, more preferably less than 5 mol% and even more preferably less than 2 mol%.

There are no particular copolymerizable components that must be used, and for example, one or more monomers selected from among hydroxycarboxylic acids such as L-lactic acid, glycolic acid, caprolactone, butyrolactone and propiolactone, C1 aliphatic diols such as ethylene glycol, 1,3-propanediol, 1,2-propanediol, 1,4-propanediol, 1,5-propanediol, hexanediol, octanediol, decanediol and dodecanediol, C2-30 aliphatic dicarboxylic acids such as succinic acid, maleic acid and adipic acid, and aromatic diols and aromatic dicarboxylic acids such as terephthalic acid, isophthalic acid, hydroxybenzoic acid and hydroquinone may be used.

There are no particular restrictions on the method of producing the polylactic acid component (B) and polylactic acid component (C) used for the invention, and for example, they may be produced by a method of direct dehydrating condensation of each lactic acid or a method of cyclodehydration of each lactic acid to form lactides, followed by ring-opening polymerization.

The catalyst used for such production may be any one that can accomplish polymerization in such a manner that the polylactic acid component (B) and polylactic acid component (C) exhibit the desired properties, and as examples there may be mentioned divalent tin compounds such as tin octylate, tin chloride and tin alkoxides, tetravalent tin compounds such as tin oxide, butyltin oxide and ethyltin oxide, metallic tin, zinc compounds, aluminum compounds, calcium compounds, lanthanide compounds, and the like.

The amount of catalyst used is from $0.42 \times 10^{-4}$ to $840 \times 10^{-4}$ (mol) per 1 kg of lactides, and in consideration of the reactivity, the color tone and stability of the resulting polylactide and the resistance to moist heat of the polylactic acid composition (A) and its molded articles, the amount is more preferably between $1.68 \times 10^{-4}$ and $42.1 \times 10^{-4}$ (mol) and most preferably between $2.53 \times 10^{-4}$ and $16.8 \times 10^{-4}$ (mol).

The polymerization catalysts in the polylactic acid component (B) and polylactic acid component (C) are preferably subjected to cleaning removal by a method known in the prior art, such as a method using a solvent, or else the catalyst is inactivated for increased molten stability and moist heat stability of the polylactic acid composition (A) and its molded articles.

For example, the following compounds are examples of inactivators used for inactivation of polylactic acid catalysts that have been obtained by molten ring-opening polymerization in the presence of metal-containing catalysts.

Specific examples include organic ligands selected from among chelate ligands that have imino groups and are capable of coordinating with specific metal polymerization catalysts, and low acid value phosphoric acids with acid values of no greater than 5 such as dihydridooxophosphoric(I) acid, dihydridotetraoxodiphosphoric(II) acid, dihydridotetraoxodiphosphoric(II, II) acid, hydridotrioxophosphoric(III) acid, dihydridopentaoxodiphosphoric(III) acid, hydridopentaoxodiphosphoric(II, IV) acid, dodecaoxohexaphosphoric(III) acid, hydridooctaoxotriphosphoric(III, IV, IV) acid, octaoxotriphosphoric(IV, III, IV) acid, hydridohexaoxodiphosphoric(III, V) acid, hexaoxodiphosphoric(IV) acid, decaoxotetraphosphoric(IV) acid, hendecaoxotetraphosphoric(IV) acid and enneaoxotriphosphoric(V, IV, IV) acid, phosphorus compounds represented by the formula ($xH_2O \cdot yP_2O_5$), such as orthophosphoric acids where x/y = 3, polyphosphoric acids where 2 > x/y > 1 such as diphosphoric acid, triphosphoric acid, tetraphosphoric acid and pentaphosphoric acid depending on their degree of condensation, as well as their mixtures, metaphosphoric acids where x/y = 1, and especially trimetaphosphoric acid and tetrametaphosphoric acid, ultraphosphoric acids where 1 > x/y > 0, which have a network structure retaining a portion of the phosphorus pentaoxide structure, and partial or total esters of these acids with monohydric or polyhydric alcohols, or polyalkylene glycols. An oxophosphoric acid or its acidic ester is preferably used from the viewpoint of catalyst inactivating power.

The polylactic acid component (B) and polylactic acid component (C) used for the invention preferably has a weight-average molecular weight reduction of no greater than 20% when melted at 260°C (hereinafter also referred to as "molten stability"). If the reduction in molecular weight is severe at high temperatures, it will not only be difficult to

accomplish melt molding but the physical properties of the obtained molded articles will also be undesirably impaired.

The inactivation treatment mentioned above can result in more favorable molten stability.

The polylactic acid composition of the invention can be obtained by combining and mixing the polylactic acid component (B) and polylactic acid component (C) and heat treating the mixture at 230-300°C, and more preferably melt kneading both components under shear conditions.

The mixer used for the melt kneading may be a batch-type reactor with a stirring blade or a continuous type reactor, or a twin-screw or single-screw extruder.

Before melt kneading, both components in a solid state are preferably evenly and thoroughly mixed using a tumbler-type powder mixer, continuous-type powder mixer or a milling apparatus.

Heat treatment at 230-300°C means that the polylactic acid component (B) and polylactic acid component (C) are kept in contact in a temperature range of 230°C-300°C. The temperature for heat treatment is preferably 240-295°C, and a more preferred range is from 250°C to 290°C. The temperature preferably does not exceed 300°C because it will become difficult to prevent decomposition reaction. A temperature of below 230°C may result in reduced production of polylactic acid stereocomplexes.

There are no particular restrictions on the heat treatment time, but it is preferably in the range of 0.1-30 minutes, more preferably 5-10 minutes and even more preferably 1-10 minutes. The atmosphere during heat treatment may be an ordinary pressure inert atmosphere, or a reduced pressure atmosphere.

The polylactic acid composition (A) of the invention preferably also contains a known crystallization nucleating agent.

From the viewpoint of moldability and fiber properties, it more preferably contains triclinic inorganic particles and/or at least one metal salt of a phosphoric acid ester.

Addition of such components can yield a polylactic acid composition (A) with a degree of stereocomplex crystallization of 30%-55%, preferably 35%-55% and even more preferably 37%-55%.

A composition having a degree of stereocomplex crystallization in this range is preferred in order to realize molded articles with excellent heat resistance, mechanical properties and color fastness.

When a crystallization nucleating agent is included in the polylactic acid composition (A), it is possible to achieve a degree of stereocomplex crystallization of 90% or greater, preferably 95% or greater and even more preferably 97% or greater for the polylactic acid (A) and polylactic acid molded articles obtained from it.

It is particularly effective for achieving a 100% degree of stereocomplex crystallization, as a single high melting point peak for stereocomplex polylactic acid in DSC.

Molded articles of polylactic acid (A) having such a high degree of stereocomplex crystallization are preferred in order to achieve high heat resistance and color fastness.

Examples of triclinic inorganic crystallization nucleating agents include wollastonite, xonotollite, sassolite, magnesium potassium hydrogencarbonate, calcium metasilicate (α), calcium metasilicate (β), manganese metasilicate, calcium sulfate, cerium(III) sulfate, zinc phosphate, zinc dihydrogenphosphate, calcium dihydrogenphosphate, aluminum aluminosilicate, potassium aluminosilicate and the like.

Preferred among these from the viewpoint of improving the degree of stereocomplex crystallization and the color fastness are wollastonite, calcium sulfate and calcium metasilicate, and especially wollastonite and calcium metasilicate (α).

As preferred metal salts of phosphoric acid esters to be used for the invention there may be mentioned metal salts of aromatic organic phosphoric acid esters represented by the following general formulas (2) and (3).

Metal salts of aromatic organic phosphoric acid esters may be used alone, or a plurality thereof or ones containing different agents may be used in combination.

[Chemical Formula 1]

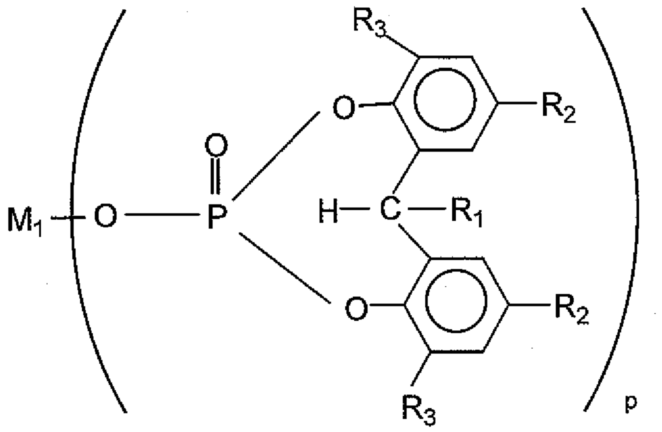

(1)

(2)

In the above formula, $R_1$ represents hydrogen or a C1-4 alkyl group, $R_2$ and $R_3$ each independently represent hydrogen or a C1-12 alkyl group, $M_1$ represents an alkali metal atom or alkaline earth metal and p represents 1 or 2.

[Chemical Formula 2]

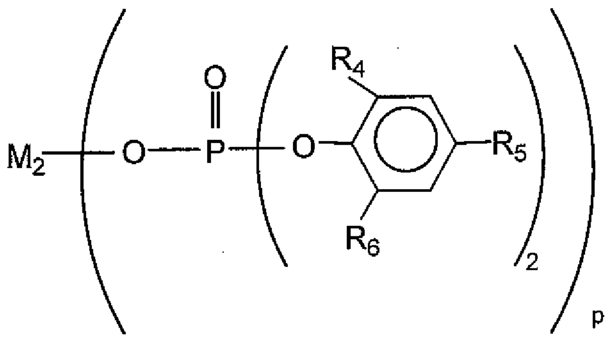

(2)(3)

In the above formula, $R_4$, $R_5$ and $R_6$ each independently represent hydrogen or a C1-12 alkyl group, $M_2$ represents an alkali metal atom or alkaline earth metal and p represents 1 or 2.

In formula (2), $R_1$ represents hydrogen or a C1-4 alkyl group. Examples of C1-4 alkyl groups represented by $R_1$ include methyl, ethyl, n-propyl, iso-propyl, n-butyl, sec-butyl and iso-butyl. $R_2$ and $R_3$ each independently represent hydrogen or a C1-12 alkyl group.

As C1-12 alkyl groups there may be mentioned methyl, ethyl, n-propyl, iso-propyl, n-butyl, sec-butyl, iso-butyl, tet-butyl, amyl, tet-amyl, hexyl, heptyl, octyl, iso-octyl, tet-octyl, 2-ethylhexyl, nonyl, iso-nonyl, decyl, iso-decyl, tet-decyl, undecyl, dodecyl, tet-dodecyl group and the like.

$M_1$ represents an alkali metal atom such as Na, K or Li, an alkaline earth metal atom such as Mg or Ca, or a zinc atom or aluminum atom. The letter p represents 1 or 2, and q is 0 when $M_1$ is an alkali metal atom, alkaline earth metal atom or zinc atom and 1 or 2 when $M_1$ is an aluminum atom.

As preferred examples of metal salts of phosphoric acid esters represented by formula (2) there may be mentioned ones wherein $R_1$ is hydrogen and $R_2$ and $R_3$ are both tet-butyl groups.

In formula (3), $R_4$, $R_5$ and $R_6$ each independently represent hydrogen or a C1-12 alkyl group.

As C1-12 alkyl groups represented by $R_4$, $R_5$ and $R_6$ there may be mentioned methyl, ethyl, n-propyl, iso-propyl, n-butyl, sec-butyl, iso-butyl, tet-butyl, amyl, tet-amyl, hexyl, heptyl, octyl, iso-octyl, tet-octyl, 2-ethylhexyl, nonyl, iso-nonyl, decyl, iso-decyl, tet-decyl, undecyl, dodecyl and tet-dodecyl.

$M_2$ represents an alkali metal atom such as Na, K or Li, an alkaline earth metal atom such as Mg or Ca, or a zinc atom or aluminum atom. The letter p represents 1 or 2, and q is 0 when $M_1$ is an alkali metal atom, alkaline earth metal atom or zinc atom and 1 or 2 when $M_1$ is an aluminum atom.

As preferred examples of metal salts of phosphoric acid esters represented by formula (3) there may be mentioned ones wherein $R_4$ and $R_6$ are methyl groups and $R_5$ is a tet-butyl group.

Commercially available metal salts of phosphoric acid esters, such as ADEKASTAB NA-10, ADEKASTAB NA-11, ADEKASTAB NA-21, ADEKASTAB NA-30 and ADEKASTAB NA-35 (trade names of Adeka Corp.) may also be effectively used for the desired purpose as metal salts of phosphoric acid esters according to the invention.

Of these, ADEKASTAB NA-21 which contains an aluminum salt of a phosphoric acid ester and an organic auxiliary agent is preferred from the viewpoint of the physical properties of its molded articles and especially fibers.

The crystallization nucleating agent is used in the range of 0.01-5 parts by weight with respect to 100 parts by weight of the polylactic acid composition (A). An amount of less than 0.01 part by weight will result in virtually none of the desired effect, or at least not sufficient for practical use. An amount of greater than 5 parts by weight is not desirable because thermal decomposition or discoloration may occur during formation of molded articles. A range of preferably 0.05-4 parts by weight and more preferably 0.1-3 parts by weight is therefore selected.

From the viewpoint of spinnability when forming a fiber from the polylactic acid composition (A), the crystal nucleating agent used for the invention preferably has as small a particle size as possible, and particularly a low content of large particles exceeding 10 μm, but for practical purposes the range is preferably 0.01-10 μm. A range of 0.05-7 μm is more preferred. If the content of large particles exceeding 10 μm is greater than 20%, the fiber cross-sections will be undesirably large during polylactic acid fiber spinning.

A crystal nucleating agent having particle sizes in this range can be easily obtained by pulverization with a ball mill, sand mill, hammer crusher, atomizer or the like followed by sorting with a classifier.

It is industrially difficult to achieve crystal nucleating agent particle sizes of smaller than 0.01 μm, and there is little need for such sizes in practical terms.

The polylactic acid composition (A) of the invention and molded articles produced using the composition preferably have a terminal carboxyl group concentration of between 0.1 and 60 equivalents/ton.

The range is more preferably 0.1-40 equivalents/ton, even more preferably 0.2-20 equivalents/ton and most preferably 0.3-10 equivalents/ton.

In order to produce a terminal carboxyl group concentration of 0.1-60 equivalents/ton for the polylactic acid composition (A) and polylactic acid composition molded articles, the preferred mode is to produce the polylactic acid with a reduced terminal carboxyl group concentration by solid-phase polymerization during production of the polylactic acid component (B) and polylactic acid component (C), and according to the invention a terminal carboxyl group capping compound is preferably used. Both may also be employed as a preferred mode.

A terminal carboxyl group capping compound will not only seal the terminal carboxyl groups of the polylactic acid resin, but is also advantageous in allowing sealing of the terminal carboxyl groups produced by decomposition of the polylactic acid resin or its additives and the terminal carboxyl groups of low molecular compounds such as lactides, lactic acids, formic acid, pyruvic acid and the like, to stabilize the resin.

Furthermore, since the acidic low molecular weight compound can seal hydroxy terminal groups produced by decomposition of the polylactic acid and moisture infiltrating into the resin composition, an additional advantage is provided as an effect of improving the durability of the polylactic acid composition (A) and its molded articles under moist heat conditions.

As terminal carboxyl group capping compounds there are preferably used one or more compounds selected from among carbodiimide compounds, epoxy compounds, oxazoline compounds, oxazine compounds and isocyanate compounds, among which carbodiimide compounds, epoxy compounds, oxazoline compounds and isocyanate compounds are especially preferred.

The carbodiimide compound used for the invention is a compound having one or more carbodiimide groups per molecule and 0.1-5 wt% isocyanate groups, with 200-500 carbodiimide equivalents.

If the carbodiimide compound contains a small number of isocyanate groups, not only will an isocyanate compound effect be exhibited, but the closer presence of the carbodiimide groups and isocyanate groups will produce a greater effect of improved moist heat durability.

The terminal carboxyl group capping compound may be selected as a single compound or a combination of two or more compounds.

The polylactic acid of the invention may have the terminal carboxyl groups and acidic low molecular compounds sealed depending on the purpose of use, and specifically, capping of the terminal carboxyl groups or acidic low molecular compounds to obtain a resin composition with a terminal carboxyl group concentration of 0.1-60 equivalents/ton will provide the polylactic acid composition (A) and its molded articles with resistance to moist heat at a level that satisfies the purpose of the invention, while from the viewpoint of stability and hydrolysis resistance during melt molding of the polylactic acid composition (A), the concentration is more preferably 0.1-40 equivalents/ton, even more preferably 0.2-20 equivalents/ton and most preferably 0.3-10 equivalents/ton.

The terminal carboxyl group concentration can be conveniently determined by neutralization titration using a potassium hydroxide solution for the resin composition dissolved in an appropriate solvent (for example, o-cresol) with addition of an indicator.

The amount of terminal carboxyl group capping compound used is preferably 0.01-10 parts by weight and more

preferably 0.03-5 parts by weight with respect to 100 parts by weight of the polylactic acid resin (A). Addition of the compound in a greater amount will produce a greater effect of lowering the terminal carboxyl group concentration, but is undesirable because it increases the risk of impairing the color tone of the resin composition and its molded articles.

Virtually no effect is exhibited if the amount used is less than 0.01%, and such addition is therefore of little use in industry.

A capping reaction catalyst may also be used according to the invention. A capping reaction catalyst is a compound with an effect of promoting reaction between the terminal carboxyl group capping compound and the terminal carboxyl groups of the polymer ends or acidic low molecular weight compounds, and there are preferred compounds capable of promoting the reaction with small amounts of addition.

As examples of such compounds there may be mentioned alkali metal compounds, alkaline earth metal compounds, tertiary amines, imidazole compounds, quaternary ammonium salts, phosphine compounds, phosphonium compounds, phosphoric acid esters, organic acids, Lewis acids and the like.

These may be used either alone or in combinations of two or more. Preferred among the above are alkali metal compounds, alkaline earth metal compounds and phosphoric acid esters.

Preferred examples include sodium stearate, potassium stearate, calcium stearate, magnesium stearate, sodium benzoate, sodium acetate, potassium acetate, calcium acetate and magnesium acetate.

There are no particular restrictions on the amount of reaction catalyst added, but it is preferably 0.001-1 part by weight, more preferably 0.005-0.5 part by weight and even more preferably 0.01-0.1 part by weight with respect to 100 parts by weight of the polylactic acid composition (A).

The polylactic acid composition (A) of the invention may also contain publicly known additives as desired in ranges that do not interfere with the purpose of the invention, and examples include plasticizers, antioxidants, light stabilizers, ultraviolet absorbers, heat stabilizers, lubricants, release agents, filler agents, antistatic agents, flame retardants, foaming agents, fillers, antimicrobial agents, nucleating agents, and coloring agents such as dyes, pigments and the like.

The polylactic acid composition (A) of the invention may be used to obtain injection molded articles, extrusion molded articles, vacuum pressure hollow molded articles, blow molded articles, films, sheets, nonwoven fabrics, fibers, cloths, composites thereof with other materials, agricultural materials, fishery materials, civil engineering and construction materials, tools, medical utensils and other molded articles, and the molding may be accomplished by ordinary methods.

The polylactic acid composition (A) of the invention is suitable for production of molded articles, and especially fibers, with excellent heat resistance and mechanical properties and particularly color fastness, by the aforementioned melt molding methods.

Because of low productivity from an industrial standpoint with solution molding in wet or dry systems, and low stability of blended solutions of poly-L-lactic acid and poly-D-lactic acid, they do not easily yield stable molded articles.

The polylactic acid molded articles of the invention have excellent practical mechanical properties, and for example, their fibers exhibit a heat shrinkage factor of 0.1-15% at 150°C, ironing resistance at 170°C, and strength of 3.5 cN/dTex or greater and ductility of 20-30%, and preferably strength of 3.8 cN/dTex or greater and even more preferably 4.0 cN/dTex or greater. Fibers with a strength of 4.0 cN/dTex or greater are preferred because they have a wide range of practical use for clothing and industrial use.

The polylactic acid fiber of the invention preferably exhibits essentially a single melting peak for stereocomplex crystals composed of poly-L-lactic acid and poly-D-lactic acid when measured with a differential scanning calorimeter (DSC), and the peak temperature of the melting point is preferably 200°C or higher. It is known that polylactic acid compositions obtained by forming stereocomplex crystals exhibit at least two endothermic peaks for the stereocomplex crystal phases which are usually the low-temperature crystal melt phase or homocrystal phase and the high-temperature crystal melt phase, depending on the types of composition components and their compositional ratio, and the conditions under which the stereocomplex crystals are formed, but essentially no polylactic acid homocrystal phase, i.e. low temperature crystal melt phase, is observed in the polylactic acid fiber of the invention, and only a single melting peak is seen in the high temperature crystal melt phase. The melt start temperature of the high-temperature crystal melt phase is 190°C or higher and preferably 200°C or higher.

Also, the polylactic acid fiber of the invention preferably has a Cr ratio on the level of 30-100%, as determined by the integrated intensity of the stereocomplex crystal diffraction peak measured by wide-angle X-ray diffraction.

Conventionally, stereocomplex polylactic acid fibers wherein the entire crystal phase is composed of only a high-temperature crystal melt phase are considered preferable because when the fiber products are ironed, there is no risk of partial softening and melting of the fibers and therefore the fabric quality and feel of the fiber products are not impaired by ironing.

Thus, if the stretching and heat setting temperature for the fibers is set to be at least 170°C, such as about 190°C, which is higher than the melting point of the low-temperature crystal melt phase, the low-temperature crystal phase is converted to a high-temperature crystal phase, and as a result a Cr ratio of higher than 90% can be attained.

While this does succeed in achieving some increase in the heat resistance, on the other hand the fiber strength

falls to 3 cN/dTex or below and melting of the homocrystals and recrystallization of the stereocomplex crystals in the fiber structure results in a loose structure, while the color fastness is also reduced, thus severely limiting the range of uses for fiber products that will be subjected to dyeing.

According to the invention, therefore, the Cr ratio of the molded articles and especially fibers is more preferably in the range of 30-90%, even more preferably 35-85% and most preferably 40-80%.

If the polylactic acid fiber satisfies this Cr ratio as well as the aforementioned conditions, it will be possible to obtain a polylactic acid fiber that maintains a high degree of color fastness with no problems of pale dyeing affinity during dyeing, that can be dyed to a metric luminance of $L^* \leq 12$ and a metric chroma of $C^* \leq 10$ with the disperse dye Dianix Black BG-FS, and that has excellent heat resistance without impairing the fabric quality and feel of the fiber products by ironing, while achieving a high fiber strength of 3.5 cN/dTex or greater, preferably 3.9 cN/dTex or greater and even more preferably 4.0 cN/dTex or greater.

The content of metal ions is preferably no greater than 100 ppm in the resin of poly-L-lactic acid and poly-D-lactic acid chips supplied for spinning by melt spinning, for example, during melt molding of the polylactic acid of the invention. The metal ions referred to here are one or more metals selected from the group consisting of alkaline earth metals, rare earth metals, Group 3 transition metals, aluminum, germanium, tin and antimony.

It is a characteristic of the polylactic acid fiber of the invention that the content of compounds with molecular weights of up to 150 is 0.001-0.2 wt%. The content of compounds with molecular weights of up to 150 in the polylactic acid composition is preferably 0.001-0.2 wt%.

Examples of compounds with molecular weights of up to 150 include D-lactide, L-lactide, L-lactic acid, D-lactic acid, formic acid, pyruvic acid, pyruvic aldehyde, acetic acid and water. If the total content of such compounds exceeds 0.2 wt% of the weight of composition (A), the obtained composition (A) and its heat resistance will be inferior.

The effect obtained by addition at less than 0.001 wt% is of minimal industrial value in comparison to the cost of the addition. The content of such low molecular compounds is in the range of preferably 0.001-0.1 wt%, even more preferably 0.002-0.05 wt% and most preferably 0.002-0.01 wt%.

These low molecular compounds may be externally added during production of the polylactic acid (B), polylactic acid (C) and composition (A), or they may be internally generated by decomposition of the resin. Therefore, appropriate means to reduce such low molecular compounds in the polylactic acid (B), polylactic acid (C) and composition (A) is preferably employed.

For example, D-lactide, L-lactide, L-lactic acid and D-lactic acid can be reduced during production of the polylactic acid (B) and polylactic acid (C) by volatile product removal or vacuum volatile product removal with or without the use of an auxiliary agent such as water or an inert gas, and such reduction is preferred. Water can be easily reduced by ordinary heat drying before the molding step, and such reduction is convenient and preferred.

Also, the polylactic acid composition (A) is preferably melt molded or melt spun with a moisture content of no greater than 100 ppm. A high moisture content will accelerate hydrolysis of the poly-L-lactic acid component and poly-D-lactic acid component, notably lowering the molecular weight and not only interfering with melt molding but also undesirably impairing the physical properties of molded articles such as filaments.

The residual lactide content in the polylactic acid fiber of the invention is preferably no greater than 400 ppm. Melt molding and melt spinning are preferably carried out after reducing the lactide content of the polylactic acid composition to no greater than 400 ppm. For a polymer obtained by a lactide process, the lactides in the polymer can cause gasification during melt molding and melt spinning to result in a molded article with contamination and yarn spots, and therefore limiting the lactide content to no greater than 400 ppm is preferred in order to obtain satisfactory molded articles.

Polylactic acid molded articles and fibers according to the invention can be satisfactorily produced by a melt molding process or melt spinning process, such as the ones described below, although there is no limitation to these processes.

A polylactic acid fiber of the invention may be obtained by ordinary melt spinning of the polylactic acid composition (A) as a blend of the polylactic acid component (B) and the polylactic acid component (C). The method of blending the polylactic acid component (B) and polylactic acid component (C) may be a method of supplying a chip blend for melt spinning, and the melt extruder used may be an ordinary melt extruder such as a pressure melter or a single-screw or twin-screw extruder. For formation of stereocomplex crystals, however, it is important to thoroughly mix the polylactic acid component (B) and polylactic acid component (C), and from this viewpoint a single-screw or twin-screw extruder is preferred. After melting the chip blend of polylactic acid component (B) chips and polylactic acid component (C) chips with a kneader, they are preferably formed into chips to prepare polylactic acid composition (A) chips which are then supplied for melt spinning. In order to improve the kneadability, it is preferred to incorporate a static kneader into the polymer flow path.

The polylactic acid composition (A) is melted with an extruder-type or pressure melter-type melt extruder and then weighed with a gear pump and discharged from the nozzle after being filtered in a pack. The shape of the nozzle and number of nozzles is not particularly restricted, and any circular, irregular, solid or hollow shapes may be employed.

The discharged filament is immediately cooled to solidification and bundled, and a lubricant is added before

wind-up. The wind-up speed is not particularly restricted but is preferably in the range of 300 m/min to 5000 m/min in order to facilitate formation of stereocomplex crystals. From the viewpoint of stretchability, the wind-up speed is preferably such as to produce a Cr ratio of 0% in wide-angle X-ray diffraction of the unstretched filament.

For example, by discharging the polylactic acid composition (A) from a discharge hole with a pack temperature of 220-260°C and an L/d of 2-10, rapidly cooling with cold air at below 50°C after discharge, and spinning at a spinning draft of 0.1-50 and a spinning speed of from 300 to 5000 m/min, with a yarn temperature below the crystallization start temperature at 3 m below the pack, it is possible to obtain an unstretched filament with a crystallinity of essentially 0 as measured by wide-angle X-ray diffraction.

The wound undrawn filament is then supplied to a drawing step, but it is not necessary for the spinning step and drawing step to be separate, and a direct spin-drawing process may be employed with continuous drawing without wind-up after spinning.

The drawing may be single-stage drawing or multistage drawing in two or more stages, and from the standpoint of producing a high-strength fiber the stretch factor is preferably 3 or greater and more preferably 4 or greater. It is more preferably selected between a factor of 3 and 10. If the draw factor is too high, however, the fiber will whiten and lose clarity, thus lowering the strength of the fiber. The preheating process for drawing may be carried out by temperature increase with a roll, or with a flat or pin-shaped contact heater, non-contact heat plate or a heating medium bath, and any ordinary process may be employed.

Heat treatment is preferably carried out after drawing and before wind-up, at a lower temperature than the melting point of the polymer. Heat treatment may be accomplished by any desired method, employing a hot roller, contact heater, non-contact heat plate or the like. The drawing temperature is selected in the range of between the polylactic acid glass temperature to 170°C, preferably 70-140°C and most preferably 80-130°C.

After drawing, the filament may be subjected to heat setting at a lower temperature than the melting point of the low melting point crystal phase of the polylactic acid, specifically 170°C or below, under tension, to obtain a polylactic acid fiber with ironing resistance and a strength of 3.5 cN/dTex or greater. The heat setting temperature is more preferably selected in a range between (drawing temperature +5°C) and 170°C, more preferably between (drawing temperature +5°C) and 150°C and most preferably between (drawing temperature +10°C) and 150°C.

The polylactic acid fiber of the invention may be used as a filament for finished yarn such as false twisted yarn or machine-textured or indenting textured yarn. It may also be used as a long filament or staple fibers, or spun yarn using the same.

According to the invention, the polylactic acid fiber may be used alone or mixed with other fibers. As other fibers to be mixed with the polylactic acid fiber of the invention there may be mentioned synthetic fibers including non-polylactic acid polyesters, acryl, nylon, aramid and the like, natural fibers such as silk, cotton, hemp or animal hair, regenerated cellulose-based fibers such as viscose rayon, cupra and polynosic fibers, or solvent-spun cellulose fibers such as lyocell.

Any publicly known methods may be employed when the polylactic acid fiber is used with other fibers.

For example, there may be mentioned methods such as blending, mix spinning, yarn doubling, mixed weaving, fine spun yarn doubling and mixed knitting. The blending ratios may be set as desired according to the purpose. If the blending ratio of the polylactic acid fiber is too low, however, the properties of the polylactic acid will not be sufficiently exhibited. When using the polylactic acid with other fibers, therefore, the polylactic acid fiber is preferably mixed at 5 wt% or greater.

A fiber of the invention having high heat resistance, high strength, a low shrink property and color fastness may be used in various types of fiber products including knitted fabrics, nonwoven fabrics and molded articles such as cups.

More specifically, a fiber of the invention having high strength, a high Cr ratio, heat resistance and a low shrink property can be suitably used for clothing such as shirts, blousons, pants and coats, for clothing materials such as cups and pads, for interior items such as curtains, carpets, mats and furniture, and for industrial materials or vehicle interior items such as belts, nets, ropes, heavy fabrics, bags, felt, filters and the like.

## Examples

The present invention will now be explained in more specific detail through the following examples, with the understanding that the invention is in no way limited thereby.

The measurements and evaluations in the examples were carried out by the following methods.

(1) Reduced viscosity:

A 0.12 g portion of polymer was dissolved in 10 mL of tetrachloroethane/phenol (volume ratio = 1/1) and the reduced viscosity (mL/g) at 35°C was measured.

(2) Weight-average molecular weight (Mw):

The weight-average molecular weight of the polymer was determined by GPC (column temperature: 40°C, chloroform) in comparison to a standard polystyrene sample.

(3) Stereocomplex crystallization ratio (Cr ratio)

A ROTA FLEX RU200B X-ray diffraction apparatus by Riken Electric Co., Ltd. was used to record the X-ray diffraction pattern onto an imaging plate by transmission under the following conditions. The diffraction intensity profile was determined in the equatorial direction of the obtained X-ray diffraction pattern, and the Cr ratio was calculated by the following formula based on the sum $\Sigma I_{SCi}$ of the integrated intensities of the stereocomplex crystal diffraction peaks appearing near $2\theta$ = 12.0°, 20.7° and 24.0°, and the integrated intensity $I_{HM}$ of the homocrystal diffraction peak appearing near $2\theta$ = 16.5°.

$\Sigma I_{SCi}$ and $I_{HM}$ were estimated by subtracting the background and the diffuse scattering by non-crystals from the diffraction intensity profile in the equatorial direction.

X-ray source: Cu-Kα rays (confocal mirror)
Output: 45 kV × 70 mA
Slit: 1 mmΦ-0.8 mmΦ
Camera length: 120 mm
Elapsed time: 10 minutes
Sample: 3 cm length, 35 mg

$$\text{Cr ratio} = \Sigma I_{sci}/(\Sigma_{Isci} + I_{HM}) \times 100$$

Here, $\Sigma I_{SCi} = I_{SC1} + I_{SC2} + I_{SC3}$, and $I_{SCi}$ (i = 1-3) is the integrated intensity for each diffraction peak near $2\theta$ = 12.0°, 20.7° and 24.0°.

(4) Measurement of melting point, crystal melting peak, crystal melt start temperature and crystal melt enthalpy.

A TA-2920 Differential Scanning Calorimeter (DSC) by TA Instruments was used.

The measurement was conducted by raising the temperature of 10 mg of sample from room temperature to 260°C at a temperature-elevating rate of 10°C/min in a nitrogen atmosphere. The homocrystal melt (start) temperature, homocrystal melt enthalpy, stereocomplex crystal melting peak, stereocomplex crystal melt (start) temperature and stereocomplex crystal melt enthalpy were measured in the first scan.

(5) Content of compounds of molecular weight ≤150:

The content of compounds with molecular weights of ≤150 in the polylactic acid composition (A) was determined by GPC.

(6) Residual lactide content:

The residual lactide content in the polylactic acid composition (A) was determined by GPC.

(7) Fiber strength, fiber ductility and 150°C heat shrinkage factor:

A TENSILON tensile tester by Orientech Co., Ltd. was used for measurement under conditions with a sample length of 25 cm and a pull rate of 30 cm/min. The 150°C heat shrinkage factor was measured according to JIS L-1013 8.18.2, a).

(8) Evaluation of fiber ironing resistance:

A 10 cm square fabric was prepared using sample fibers and was ironed for 30 seconds using an iron adjusted to a surface temperature of 170°C, and the heat resistance was judged based on changes in fabric shape and feel.

Acceptable (G): Shape and feel of fabric before treatment satisfactorily maintained without fusing of monofilaments.

Unacceptable (P): Fusion of monofilaments or heat distortion of fabric or more rigid feel with respect to before treatment.

(9) Evaluation of disperse dye affinity

The obtained polylactic acid fiber was mix-knitted with polyethylene terephthalate fiber to produce a pile fabric (velour) which was scoured at 80°C × 20 minutes and then at 150°C for 20 minutes. The fabric was dyed at 130°C × 1 hour in a dye bath under the conditions shown below, and then an aqueous solution dissolving 0.5 g/l caustic soda and 0.2 g/l hydrosulfite was used for reduction treatment at 60°C × 20 minutes, after which the metric luminance $L^*$ and metric chroma $C^*$ were evaluated. The $L^*$ value is the metric luminance according to the $L^*a^*b^*$ color system, with a smaller value representing deeper black. The $L^*$ value is preferably no greater than 8 and even more preferably no greater than 6. The metric chroma $C^*$ value is the chroma defined by $(a^{*2} + b^{*2})^{1/22}$, with a smaller value representing blacker black with achromatic color.

It was also judged whether or not the polylactic acid fiber experienced shrinkage resulting in distortion of the fabric. Distortion of a level not constituting a problem for practical use was judged to be acceptable.

Dyeing conditions:

Dyeing temperature: 130°C
Dyeing time: 1 hour
Dye: Dianix Black BG-FS
Dyeing density: 20% owf
Liquor to goods ratio: 1:50
Bath pH: 4.5

(10) Color fastness:

A 10 cm square evaluation fabric was prepared using the polylactic acid fiber, and the sample fabric was subjected to exhaustion dyeing for 60 minutes at 110°C in the following disperse dye aqueous solution with a liquor to goods ratio of 1:30. After dyeing, the fabric was wrung and dried, subjected to reduction washing for 20 minutes at 70°C in the following reduction washing solution with a liquor to goods ratio of 1:30, and then wrung and dried to obtain a dyed fabric. The fastness was evaluated by an ultraviolet carbon arc lamp test according to JIS-L-0842-1996. The results were evaluated according to JIS, with grades 5-6 as VG and grade 4-5 as G, and overall with grade 4 or greater as acceptable and less than grade 4 as unacceptable.

Disperse dyeing aqueous solution:

(1) Dye: DENAPOLE dye by Nagase & Co., Ltd.
Yellow GE: 3% owf
Red GE: 3% owf
Blue GE: 3% owf
(2) Acetic acid (48% concentration): 0.1%
(3) Sodium acetate: 0.2%

Reduction washing solution:

(1) Hydrosulfite: 0.2%
(2) Sodium carbonate: 0.2%

(11) $L^*a^*b^*$ color difference:

The resin chips or pellets or fabric were used for measurement of the $L^*a^*b^*$ value using a Z-1001DP color difference meter by Nippon Denshoku Co., Ltd.

(12) Terminal carboxyl group concentration:

The terminal carboxyl group concentration of the sample was dissolved in o-cresol, and an indicator was added for neutralization titration with a potassium hydroxide solution.

[Production Example 1] Production of polymer $B^1$

After adding 100 parts by weight of L-lactide with an optical purity of 99.8% (Musashino Chemical Laboratory, Co. Ltd.) to a polymerizing reactor, the system was substituted with nitrogen, and there were added 0.2 part by weight of stearyl alcohol and 0.05 part by weight of tin octylate as a catalyst for polymerization at 190°C, 2 hours to produce a polymer. The polymer was washed with an acetone solution containing 7% 5N hydrochloric acid for removal of the catalyst to obtain polymer $B^1$. The reduced viscosity of the obtained polymer $B^1$ was 2.92 (mL/g), and the weight-average molecular weight was 190,000. The melting point (Tm) was 168°C. The crystallization point (Tc) was 122°C.

[Production Example 2] Production of polymer $C^1$

After adding 100 parts by weight of D-lactide with an optical purity of 99.8% (Musashino Chemical Laboratory, Co. Ltd.) to a polymerizing reactor, the system was substituted with nitrogen, and there were added 0.2 part by weight of stearyl alcohol and 0.05 part by weight of tin octylate as a catalyst for polymerization at 190°C, 2 hours to produce a polymer. The polymer was washed with an acetone solution containing 7% 5N hydrochloric acid for removal of the catalyst to obtain polymer $C^1$. The reduced viscosity of the obtained polymer $C^1$ was 2.65 (mL/g), and the weight-average molecular weight was 200,000. The melting point (Tm) was 176°C. The crystallization point (Tc) was 139°C.

[Example 1]

Chips of polymer $B^1$ and polymer $C^1$ were prepared and mixed as a chip blend in a proportion of polymer $B^1$: polymer $C^1$ = 50/50, after which the mixture was dried under reduced pressure at 120°C for 5 hours. Next, 100 parts by weight of the chips and 1 part by weight of Stabaxol I by Rhein Chemie, Japan were melted at 240°C using a melt spinning machine equipped with a single-screw extruder to obtain a polylactic acid composition (A), which was discharged from a nozzle with 36 discharge holes with sizes of 0.25Φ (L/D = 2), at a pack temperature of 235°C and a rate of 40 g/min. The temperature of the yarn was 180°C at 3 m below the pack immediately after discharge, and after cooling to 10°C with cold air from a spinning chimney, it was 90°C at 2 m below the pack, which was already below the crystallization temperature. The yarn was bundled, a lubricant was added and the undrawn filament was wound up at a spinning speed of 500 m/min. The spinning draft was 45.

Pellets of the polylactic acid composition (A), obtained by pelletizing the polylactic acid composition (A) without discharge from a melt spinning machine, had a weight-average molecular weight of 160,000, a terminal carboxyl group concentration of 15 equivalents/ton, a Cr content of 31%, a Cr ratio of 90%, a content of compounds of molecular weight ≤150 of 0.05 and a residual lactide content of 400 ppm.

The undrawn filament with a Cr content of 35% and a Cr ratio of 0% was drawn to a factor of 4.9 by preheating at 90°C and then heat set at 140°C to obtain a 160 dtex/36 fil polylactic acid fiber.

The obtained drawn yarn exhibited a single melting peak for stereocomplex crystals composed of poly-L-lactic acid and poly-D-lactic acid when measured with a differential scanning calorimeter (DSC), and the melting point was 224°C. The fiber had a Cr ratio of 45% as measured by wide-angle X-ray diffraction, a strength of 4.6 cN/dtex and a ductility of 35%, and therefore retained sufficient practical strength. The ironing resistance was satisfactory and judged as acceptable. The color fastness was also judged as acceptable.

[Examples 2-5 and Comparative Examples 1, 2]

Polylactic acid fibers were obtained by changing only the heat setting temperature in Example 1 to 110°C, 130°C, 150°C, 170°C, 180°C or 200°C. The obtained fibers exhibited a single melting peak for stereocomplex crystals in DSC measurement, and the melting points were all 200°C or higher. The results are shown in Table 1 and Table 2 together with the results for Example 1.

[Table 1]

| | Heat setting temperature (°C) | Fiber strength (cN/dTex) | Fiber ductility (%) | 150°C heat shrinkage factor (%) | Ironing resistance | Disperse dye-ability | Dye fastness |
|---|---|---|---|---|---|---|---|
| Example 1 | 140 | 4.6 | 35 | G | G | G | G |
| Example 2 | 110 | 3.9 | 38 | G | G | G | G |
| Example 3 | 130 | 4.1 | 35 | G | G | G | G |
| Example 4 | 150 | 3.9 | 32 | G | G | G | G |
| Example 5 | 170 | 3.5 | 31 | G | G | G | G |
| Comp. Ex. 1 | 180 | 2.9 | 30 | G | G | P | P |
| Comp. Ex. 2 | 200 | 2.5 | 28 | G | G | P | P |

[Table 2]

| | MW | Terminal carboxyl group concentration | Polymer | | Unstretched filament | | Stretched filament | | Content of compounds with molecular weight of ≤150 | Residual lactide content |
|---|---|---|---|---|---|---|---|---|---|---|
| | | (eq./ton) | Cr (%) | Cr ratio (%) | Cr (%) | Cr ratio (%) | Cr (%) | Cr ratio (%) | (wt%) | ppm |
| Example 1 | 16.1 | 9 | 31 | 90 | 35 | 0 | 48 | 45 | 0.05 | 300 |
| Example 2 | 16.1 | 11 | 31 | 90 | 35 | 0 | 44 | 32 | 0.05 | 300 |
| Example 3 | 16.1 | 12 | 31 | 90 | 35 | 0 | 43 | 40 | 0.05 | 200 |
| Example 4 | 16.1 | 9 | 31 | 90 | 35 | 0 | 48 | 63 | 0.04 | 200 |
| Example 5 | 16.1 | 9 | 31 | 90 | 35 | 0 | 49 | 70 | 0.05 | 200 |
| Comp. Ex. 1 | 16.1 | 7 | 31 | 90 | 35 | 0 | 52 | 96 | 0.04 | 100 |
| Comp. Ex. 2 | 16.1 | 7 | 31 | 90 | 35 | 0 | 54 | 100 | 0.04 | 100 |

[Example 6]

A 160 dtex/36 fil polylactic acid fiber was obtained by the same method as Example 1, except that a chip blend with a weight proportion of polymer $B^1$:polymer $C^1$ = 50/50 was prepared and spinning was carried out with only the melting temperature changed to 260°C.

Pellets of the polylactic acid composition (A), obtained by pelletizing the polylactic acid composition (A) without discharge from a melt spinning machine, had a weight-average molecular weight of 160,000, a terminal carboxyl group

concentration of 15 equivalents/ton, a Cr content of 31%, a Cr ratio of 90%, a content of compounds of molecular weight ≤150 of 0.05 and a residual lactide content of 400 ppm.

The Cr content of the unstretched filament was 38% and the Cr ratio was 0%, while the stretched yarn exhibited a single melting peak for stereocomplex crystals composed of poly-L-lactic acid and poly-D-lactic acid in DSC measurement, a melting point of 215°C, a Cr ratio of 47%, a fiber strength of 4.7 cN/dtex and a ductility of 31%, and therefore retained sufficient practical strength. The ironing resistance and dye affinity were also acceptable.

[Production Example 3] Production of polymer $B^2$

After nitrogen substitution of a FULLZONE blade-installed vertical stirring tank (40 L) equipped with a vacuum tube, a nitrogen gas tube, a catalyst/L-lactide solution addition tube and an alcohol initiator addition tube, there were charged 30 kg of L-lactide with an optical purity of 99.8%, 0.90 kg (0.030 mol/kg) of stearyl alcohol and 6.14 g ($5.05 \times 10^{-4}$ mol/l kg) of tin octylate, and the temperature was raised to 150°C under an atmosphere with a nitrogen pressure of 106.4 kPa. Stirring was initiated upon dissolution of the contents, and the internal temperature was raised to 190°C. Cooling was initiated upon start of the reaction after the internal temperature exceeded 180°C, and the internal temperature was kept at between 185°C and 190°C for 1 hour of continuous reaction. After an hour of reaction while stirring at an internal temperature of between 200°C and 210°C with a nitrogen pressure of 106.4 kPa, a phosphorus-based inactivator was added and stirring was continued for 10 minutes. After suspending the stirring and allowing the mixture to stand for 20 minutes for removal of the air bubbles, the internal pressure was increased to 2-3 atmospheres in terms of nitrogen pressure and the prepolymer was extruded through a chip cutter for pelletization of the prepolymer with a weight-average molecular weight of 120,000.

The pellets were melted with an extruder and loaded into a shaftless cage reactor at 15 kg/hr and the pressure was reduced to 1.03 kPa for reduction of the residual lactides, and this was followed by rechipping to obtain polymer $B^2$ with a weight-average molecular weight of 123,000, a terminal carboxyl group concentration of 30 equivalents/ton, a low molecular weight compound (compounds of molecular weight ≤150) content of 0.05 wt% and a residual lactide content of 200 ppm.

[Production Example 4] Production of polymer $C^2$

The same procedure was carried out as in Production Example 3 except for using D-lactide with an optical purity of 99.8% instead of L-lactide with an optical purity of 99.8%, to obtain polymer $C^2$ with a weight-average molecular weight of 125,000, a terminal carboxyl group concentration of 32 equivalents/ton, a low molecular weight compound content of 0.03 wt% and a residual lactide content of 300 ppm.

[Example 7]

Polymer $B^2$ chips and polymer $C^2$ chips obtained by the procedures of Production Example 3 and Production Example 4 were blended in a weight ratio of 1/1 and dried at 120°C for 5 hours, after which there were added 0.3 part by weight of CARBODILITE LA-1 by Nisshinbo Industries, Inc. as a terminal carboxyl group sealing compound and 0.1 part by weight of the phosphoric acid ester metal salt ADEKASTAB NA21 by Adeka Corp. with a mean particle size of 0.1 μm as a crystallization nucleating agent, with respect to 100 parts by weight of polylactic acid, and the mixture was melt kneaded with a biaxial kneader at a cylinder temperature of 270°C with a residence time of 5 minutes and pelletized with a chip cutter to prepare pellets of polylactic acid composition (A). The obtained pellets of polylactic acid composition (A) had a weight-average molecular weight of 122,000, a terminal carboxyl group concentration of 7 equivalents/ton, a Cr content of 41% and a Cr ratio of 98%.

The pellets of polylactic acid composition (A) were used as material for 100 shot molding of molded pieces for ASTM measurement to a thickness of 3 mm, using a NEOMAT N150/75 injection molding machine by Sumitomo Heavy Industries, Ltd. with a cylinder temperature of 260°C, a mold temperature of 60°C and a molding cycle of 150 seconds, and the presence of any black contamination or distortion in the last 10 shots of molded articles was visually examined. On a scale where runs with no distortion or black contamination were judged as acceptable (OK), runs with obvious distortion or black contamination were judged as unacceptable (NG) and runs with minute contamination and microdistortion were judged as "pending" (Δ), the samples were evaluated as OK.

The moldability evaluation samples were dyed in the same manner as fibers and their color fastness was evaluated. The light fastness was visually evaluated. On a scale where a lack of color spots and virtually no discoloration under light was judged as acceptable and large color spots with significant discoloration under light under the same conditions as fibers as light fastness was judged as unacceptable, the samples were evaluated as acceptable.

[Example 8]

The polylactic acid composition (A) chips produced in Example 7 were melted at 240°C using a single-screw extruder-equipped melt spinning machine and discharged at 40 g/min from a nozzle with 36 discharge holes with sizes of 0.25Φ. The temperature under the pack immediately after discharge was 180°C, and after cooling with a spinning chimney and bundling, a lubricant was added and the unstretched filament was wound up at a speed of 500 m/min. The unstretched filament with a Sc conversion rate of 0% was stretched to a factor of 4.9 by preheating at 90°C and then heat set at 140°C to obtain a 160 dtex/36 fil polylactic acid fiber.

The obtained drawn yarn exhibited a single melting peak for stereocomplex crystals composed of poly-L-lactic acid and poly-D-lactic acid when measured with a differential scanning calorimeter (DSC), and the melting point was 224°C. The fiber had a Cr ratio of 47% as measured by wide-angle X-ray diffraction, a strength of 4.7 cN/dtex and a ductility of 35%, and therefore had sufficient practical strength and satisfactory ironing resistance and was evaluated as acceptable. The dye affinity of the fiber was evaluated as OK and the fastness was evaluated as acceptable.

## Claims

**1.** A polylactic acid composition (A) comprising

(1) a polylactic acid component (B) comprising at least 90 mol% of an L-lactic acid unit and less than 10% of copolymerizing component units other than L-lactic acid, and
(2) a polylactic acid component (C) comprising at least 90 mol% of a D-lactic acid unit and less than 10 mol% of copolymerizing component units other than D-lactic acid,

which is a mixed composition with a (B)/(C) weight ratio of between 10/90 and 90/10, and satisfying the following conditions.

(a) The weight-average molecular weight is 70,000-500,000.
(b) The degree of stereocomplex crystallization (Cr) is 30%-55%, as calculated by the following formula.

[Formula 1]

$$Cr = (\Delta Hmsc/142) \times 100 \quad (1)$$

(Where ΔHmsc (J/g) is the heat of fusion of the polylactic acid stereocomplex crystals measured with a differential scanning calorimeter (DSC), and 142 (J/g) is the crystal heat of fusion of perfect crystals of stereocomplex polylactic acid.

**2.** A polylactic acid molded article comprising a polylactic acid composition (A) according to claim 1.

**3.** A polylactic acid molded article according to claim 2, wherein the polylactic acid molded article is a polylactic acid fiber.

**4.** A polylactic acid fiber according to claim 3,
wherein the content of compounds of molecular weight ≤150 in the fiber is 0.001-0.2 wt%.

**5.** A polylactic acid fiber according to claim 4,
wherein the residual lactide content of the fiber is no greater than 400 ppm.

**6.** A polylactic acid fiber according to claim 3,
wherein the fiber is an unstretched filament and the stereocomplex crystallization ratio (Cr ratio) according to wide-angle X-ray diffraction is essentially zero.

**7.** A polylactic acid fiber according to claim 3, which has a stereocomplex crystal crystallization ratio (Cr ratio) of 30-100% in wide-angle X-ray diffraction (XRD), which exhibits essentially a single melting peak for stereocomplex crystals composed of poly-L-lactic acid and poly-D-lactic acid as measured using a differential scanning calorimeter (DSC), and which has a melting point of 200°C or higher.

**8.** A polylactic acid fiber according to claim 7, wherein the stereocomplex crystallization ratio (Cr ratio) according to wide-angle X-ray diffraction (XRD) is 30-90%.

**9.** A polylactic acid fiber according to claim 3, which has a heat shrinkage factor of 0.1-15% at 150°C, ironing resistance at 170°C, a strength of 3.5 cN/dTex or greater and a ductility of 20-50%.

**10.** A polylactic acid fiber according to claim 3 which is dyeable and which has a metric luminance $L^*$ of no greater than 12 and a metric chroma $C^*$ of no greater than 10 with the disperse dye Dianix Black BG-FS.

**11.** A fiber product **characterized by** comprising a polylactic acid fiber according to any one of claims 3 to 10.

**12.** A process for production of a polylactic acid fiber whereby a polylactic acid fiber according to claim 6 is obtained by discharging a polylactic acid composition (A) from a discharge hole with a pack temperature of 220-260°C and an L/d of 2-10, rapidly cooling with cold air at below 50°C after discharge, and spinning at a spinning draft of 0.1-50 and a spinning speed of from 300 to 5000 m/min, with a yarn temperature of no higher than the crystallization start temperature at 3 m below the pack.

**13.** A process for production of a polylactic acid fiber according to claim 12, wherein the content of compounds of molecular weight ≤150 in the polylactic acid composition (A) supplied to melt spinning is 0.001-0.2 wt%.

**14.** A process for production of a polylactic acid fiber according to claim 13, wherein the residual lactide content in the polylactic acid composition (A) supplied to melt spinning is no greater than 400 ppm.

**15.** A process for production of a polylactic acid fiber, whereby a polylactic acid according to any one of claims 7 to 10 is obtained by stretching an unstretched filament according to claim 6 under conditions with a stretching temperature above the glass transition temperature of polylactic acid and below 170°C and a stretch factor of 3-10, and heat setting it at a temperature below 170°C.

## INTERNATIONAL SEARCH REPORT

International application No.
PCT/JP2008/056628

A. CLASSIFICATION OF SUBJECT MATTER
*C08L67/04*(2006.01)i, *D01F6/62*(2006.01)i, *C08L101/16*(2006.01)n

According to International Patent Classification (IPC) or to both national classification and IPC

B. FIELDS SEARCHED

Minimum documentation searched (classification system followed by classification symbols)
C08L67/04, D01F6/62, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| P,X | WO 2008/29934 A1 (Teijin Ltd.), 13 March, 2008 (13.03.08), Full text (Family: none) | 1-15 |
| P,A | JP 2007-231480 A (Riken, Japan), 13 September, 2007 (13.09.07), Full text (Family: none) | 1-15 |
| X | JP 2007-70750 A (Teijin Ltd.), 22 March, 2007 (22.03.07), Full text (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>22 May, 2008 (22.05.08) | Date of mailing of the international search report<br>03 June, 2008 (03.06.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/056628

C (Continuation). DOCUMENTS CONSIDERED TO BE RELEVANT

| Category* | Citation of document, with indication, where appropriate, of the relevant passages | Relevant to claim No. |
|---|---|---|
| X | WO 2007/07893 A1 (Teijin Ltd.), 18 January, 2007 (18.01.07), Full text & JP 2007-23393 A & JP 2007-23083 A & JP 2007-70378 A & JP 2007-70736 A | 1-15 |
| X | JP 2006-274481 A (Toray Industries, Inc.), 12 October, 2006 (12.10.06), Claims; Par. Nos. [0015], [0030]; examples (Family: none) | 1-15 |
| A | WO 2006/09285 A1 (Teijin Ltd.), 26 January, 2006 (26.01.06), Full text & CA 2575049 A1 & EP 1780234 A1 & BR 2005013553 A & KR 2007043796 A & IN 2007 CN00252 A & US 20080039579 A1 | 1-15 |
| A | JP 9-25400 A (Mitsubishi Rayon Co., Ltd.), 28 January, 1997 (28.01.97), Full text (Family: none) | 1-15 |
| A | JP 61-36321 A (Daicel Chemical Industries, Ltd.), 21 February, 1986 (21.02.86), Full text (Family: none) | 1-15 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63241024 A
- JP 2003293220 A
- JP 2005023512 A
- JP 2003049374 A
- JP 3470676 B


### Non-patent literature cited in the description


- *Macromolecules,* 1991, vol. 24, 5651
- Kenkyu Kaihatsu, Dyeing of polylactic acid fibers. Nagase Color Chemicals Techno Center, 2-5
- **H. Tsuji.** Polylactide. *Biopolymers,* vol. 4